# EUROPEAN PATENT SPECIFICATION

(11) **EP 2 300 740 B1**
(45) Date of publication and mention of the grant of the patent: **25.09.2013**
(21) Application number: 09766907.1
(22) Date of filing: 08.06.2009
(51) Int. Cl.: F16J 15/08, F16J 15/28, F16J 15/32

(54) **SEALING ARRANGEMENT FOR CYLINDRICAL SURFACES AND A SEAL TO BE USED IN SUCH SEALING ARRANGEMENTS**
VERSIEGELUNGSANORDNUNG FÜR ZYLINDERFÖRMIGE FLÄCHEN UND DICHTUNG FÜR DERARTIGE VERSIEGELUNGSANORDNUNGEN
DISPOSITIF DE JOINT D'ÉTANCHÉITÉ POUR SURFACES CYLINDRIQUES ET JOINT À MONTER DANS DE TELS DISPOSITIFS DE JOINTS D'ÉTANCHÉITÉ

(30) Priority: 18.06.2008 PL 38545708
(43) Date of publication of application: 30.03.2011
(73) Proprietor: Radowski, Piotr Mitre, 81-526 Gdynia (PL)
(72) Inventor: GUMULA, Stanislaw, PL-31-020 Wieliczka (PL); DORUCH, Henryk, PL-30-717 Krakow (PL); RADOWSKI, Pawel, PL-81-526 Gdynia (PL); JAROS, Ryszard, PL-80-147 Gdansk (PL)
(74) Representative: Pomianek, Grazyna
(86) International application number: PCT/PL2009/000064
(87) International publication number: WO 2009/154490

(56) References cited:
- GB-A- 298 665
- US-A- 1 700 894
- US-A- 2 590 696
- US-A- 4 097 095

## Description

This invention relates to a sealing arrangement for cylindrical surfaces which is also to be used especially with parts being in the to-and-fro motion or in the rotary motion, as well as in stationary arrangements working in fluid, gas or high vacuum environments.

A metal seal known from the Polish Patent Application P-323412 comprises an outer steel ring pressed onto an inner ring made of bronze. A clearance between an outer ring and an inner one is filled with silicone, whereas an outer ring is pressed into a hole in a gland, and an inner ring is pressed into a ram. Such a seal serves especially for high pressure chambers in which pressure is up to 1500 MPa.

From another Polish Patent Application P-372743 a metal seal is known having an outer contour in form of any geometric figure, said seal being characterized in that its outer part is connected to its center part by means of an oblique necking the thickness of which equals the half of the thickness "g" of the seal, wherein a slope angle α of the necking surface is not greater than 10°, and a slope angle β of the outer part is greater than the angle α in order to form a profile grove, however a ratio of the length L to the thickness g of the seal is equal or greater than double thickness g of the seal. Such a metal seal finds its use in collar and screw connections in high pressure arrangements and pipelines.

From the Polish Patent Specification PL174368 a seal is known made of resilient rubber and located between two parts of a machine moving in relation one to another. This seal has its first surface situated from an edge of a dynamic sealing arrangement in the direction to the lower pressure side (N). The seal has also an outer peripheral surface that is sloped in relation to the bottom of the grove when the seal is not pressed home into the grove. Cone surfaces extend into theoretical cone surfaces converging along the cut line. This cut line is always located between the cylindrical surface and the circumference surface of the second part of the machine.

From the Polish Patent Application P-290551 a sealing arrangement for an element rotating in a tank is known, said arrangement comprising flange washers and is built-up of two disks set onto a shaft being sealed at both sides of the tank wall, equipped with collar gaskets located in recesses in the disks from the side of the shaft being sealed. Moreover the disks are divided by two ring seals adhering to both sides of the tank wall, and they are connected one to another as well as to the tank wall by means of a screw and a nut equipped from the inner side with washers and sealing inserts.

From the Polish Patent Application P-307018 a method of sealing a working chamber in a cylinder is known, where at least two adjoined piston rings are used with their joints shifted one to another by a determined angle, said rings being placed in one piston groove comprising means for positioning said pistons. In another embodiment at least one pair of adjoining piston rings is used with their joints shifted one to another by a determined angle, said piston rings being located in one piston groove. An angle by which joints are shifted is determined by means of elements locating rings in relation one to another. A sealing arrangement comprises two piston rings set in one piston groove and adjoined one to another with their flank surfaces.

From the Polish Patent Specification PL181970 a sealing ring having a reversible profile is known characterized in that at its lip, trapezoid, parabolic or another outer sealing surface a height of its profile (h) is equal to a half of its width (b), and its pitch diameter (Dp) is greater than the profile height (h) in the range from 20 to 50 times.

US-A-2590 696 discloses liquid seals for moving shafts. The tightness is achieved using a conical spring of the Belliville type equipped with a rubber seal. The seal has a short flange so as to enhance contact with the shaft. The sealing is placed in a ring box.
The range of applications of that invention is very limited because of the low rotating speeds and low pressures.

US-A-4 097 095 discloses anti-friction bearing cartridges with self-contained lubrication of the low maintenance type. The sealing is composed of many elements preventing the leakage of the lubricant. Inside housing is a rotary seal affixed to shaft and statically sealed thereagainst by an O-ring in a grove in the shaft. Abut-ting rotary seal is a seal disc of a material which is softer than bearing race. Seal disc is formed with flange around its outer edge projecting away from seal 21.

GB 298 665 A discloses fluid tight packing devices of the kind comprising frusto-conical rings which are adapted to be distorted by axial pressure so that their smaller openings are reduced in diameter and their larger openings increase in diameter.

US-A-1 700 894 discloses a metallic packing for fluid under pressure. The pressure of a confined fluid is introduced to an intermediate packing ring to expand the same to more effectually seal the fluid chamber.

The present invention resolves the problem of smooth regulation and correction of sealing effectiveness as well as the reduction of friction between surfaces being sealed.

An essence of this invention is a sealing arrangement for inner cylindrical surfaces, according to claim 1, or for outer cylindrical surfaces, according to claim 3, said sealing arrangement designed for inner cylindrical surfaces, comprising a resilient profile seal in form of a disk having its sealing lip formed at its outer rim as a profile ring, wherein pressure is applied to it by a screw adjusting a clearance between said seal and a sealed surface. A pressure is exerted onto the seal from the side of the profile ring. Said sealing ring is L-like shaped.
According to the second option a sealing arrangement designed for outer cylindrical surfaces, comprising a resilient profile seal in form of a disk having its sealing lip formed at its inner rim as a profile ring, wherein pressure is applied to it by a screw adjusting a clearance between said seal and a sealed surface. A pressure is exerted onto the seal from the side opposite to the profile ring. Said sealing ring is L-like shaped.
Such the said two options of a sealing arrangement may also act as a coupling in case of rotary motion or as a brake in case of translation or to-and-fro motion. According to the invention the seal is made of a material stable to heat, advantageously of metal.

The: sealing arrangement according to this invention makes it possible to control smoothly the sealing effect by controlling the size of the clearance between sealed elements with the accuracy to a part of micrometer. It is also an advantage of this invention that the predicted surface pressures can be achieved in a designed connection, what substantially improves its tightness in static arrangements or transforms a designed connection in a coupling in case of a rotary shaft or in a brake having a controlled braking force in a case of translation or to-and-fro motions. The seal can work up to 10000 at and up to 1000°C. The sealing arrangement enables the continuous compensation of any possible abrasive wear in a projected connection in its all possible configurations. In connection with any residual friction force no abrasive consumption of a working surface occurs between sealed surfaces. The invention can be also used when measuring a quality of oval surfaces with the accuracy up to a part of micrometer.

The subject of this invention is shown in its embodiments in the picture. Fig. 1 presents the axial section of an outer dynamic sealing arrangement for a piston, fig. 2 presents an axial section of an inner sealing arrangement for a piston rod or a shaft in its rotary motion, fig. 3 presents a seal for an outer sealing arrangement, and fig. 4 presents a seal for an inner sealing arrangement.

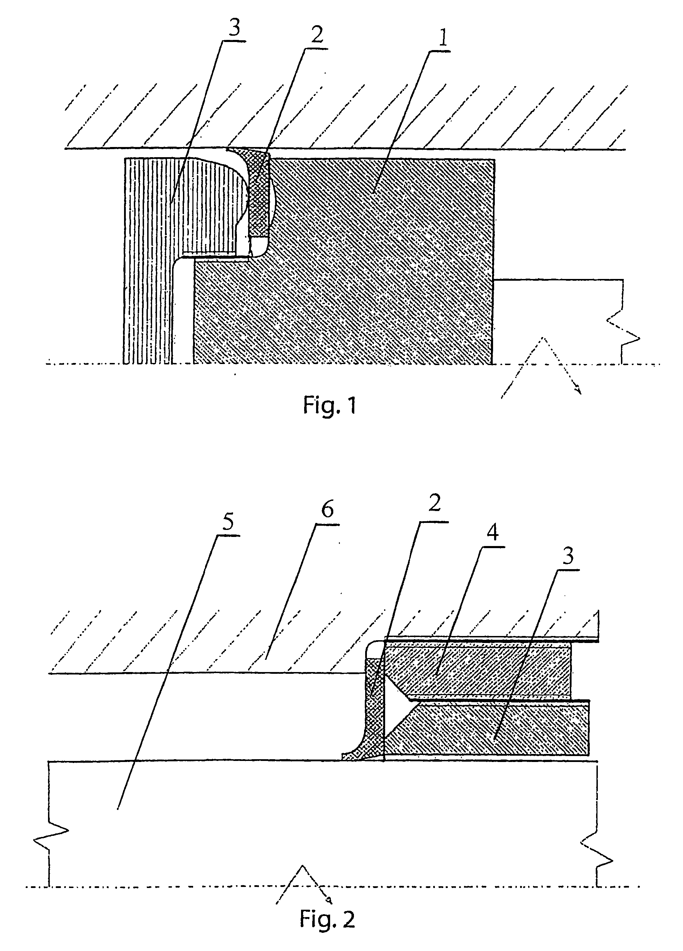

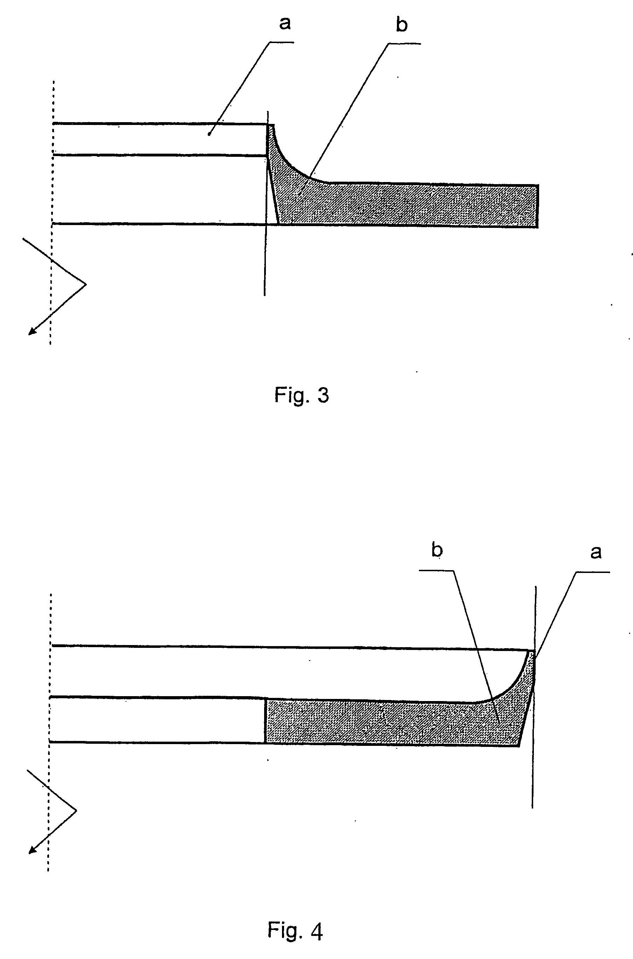

An inner dynamic sealing arrangement according to the invention shown in fig. 1 comprises an outer disk seal 2 placed in a piston 1. Said seal 2 is shown in fig. 4. From the side of a profile ring b a pressure is exerted onto the seal by a screw 3 controlling a gap size between the seal and a sealed cylindrical surface. The seal 2 is made of metal. At its outer rim it has a profile L-like ring b with its sealing lip a. The seal is bent under a pressure of the control screw 3 what reduces an outer diameter of the profile ring to its desired size.

As it is shown in fig. 2 a sealing arrangement in its inner version designed for a piston rod or a shaft has an outer disk seal 2 set on a pin rod 5, said seal 2 being set in a housing 6 by means of a binding screw 4. The seal is made of metal. On its inner rim the seal has the profile L-like ring b with its sealing lip, as it is shown in fig. 3. The control screw 3 in cooperation with the binding screw 4 exerts a pressure onto the seal from the opposite side of the profile ring. The seal 2 is bent by the control screw when it is screwed in, and in the result an inner diameter of the sealing profile ring is increased to its desired size.

## Claims

1. A sealing arrangement for inner cylindrical surfaces comprising a screw (3) and a resilient seal (2) which is given the shape of a disk with a sealing lip (a) around its outer rim forming a profile ring (b) approximating letter L in shape **characterized in that** the resilient profile seal (2) is subject to pressure exerted from the side of the profile ring (b) by the screw (3) controlling the size of the clearance between the said seal and the sealed surface, and the said seal (2) is bent by the control screw (3), and in the result an outer diameter of the sealing profile ring (b) is reduced to its desired size.

2. The sealing arrangement as claimed in claim 1 **characterized in that** it can function as a coupling designed for rotary motion or as a brake in a case of translation or to-and-fro motion.

3. A sealing arrangement for outer cylindrical surfaces comprising a screw (3) and a resilient seal (2) which is given the shape of a disk with a sealing lip (a) around its inner rim forming a profile ring (b) approximating letter L in shape wherein pressure is exerted from the side opposite to the profile ring (b) by the screw controlling the size of the clearance between the said seal and the sealed surface, **characterized in that** the resilient profile seal (2) is bent by the control screw (3) when it is screwed in, and in the result an inner diameter of the sealing profile ring (b) is increased to its desired size.

4. The sealing arrangement as claimed in claim 3 **characterized in that** it can function as a coupling designed for rotary motion or as a brake in a case of translation or to-and-fro motion.

## Patentansprüche

1. Versiegelungsanordnung für innere zylindrische Flächen, enthaltend eine Schraube (3) und eine elastische Dichtung (2) in Form eines Diskus mit einer profilierten Dichtlippe (a), ausgebildet am deren inneren Rand in Form eines Formringes (b), mit einer dem Buchstaben "L" ähnlichen Form, **dadurch gekennzeichnet, dass** auf eine elastische Profildichtung (2) von der Seite des Formringes (b) Druck durch die Schraube (3) zur Regulierung der Spaltgröße zwischen der Dichtung und der abzudichtenden Fläche ausgeübt wird, wobei die elastische Dichtung (2) durch die Schraube (3) zur Regulierung gebogen wird, wodurch der Außendurchmesser des Formringes (b) auf eine gewünschte Größe reduziert wird.

2. Versiegelungsanordnung nach Anspruch 1, **dadurch gekennzeichnet, dass** diese die Funktion einer Kupplung für eine Drehbewegung bzw. einer Bremse für eine hingehende Bewegung bzw. eine hin- und hergehende Bewegung erfüllen kann.

3. Versiegelungsanordnung für äußere zylindrische Flächen, enthaltend eine Schraube (3) und eine elastische Dichtung (2) in Form eines Diskus mit einer profilierten Dichtlippe (a), ausgebildet am deren inneren Rand in Form eines Formringes (b), mit einer dem Buchstaben "L" ähnlichen Form, auf die von der dem Formring (b) abgewandten Seite Druck durch die Schraube (3) zur Regulierung der Spaltgröße zwischen der Dichtung und der abzudichtenden Fläche ausgeübt wird, **dadurch gekennzeichnet, dass** die elastische Dichtung (2) durch die Schraube (3) zur Regulierung gebogen wird, wodurch der Innendurchmesser des Formringes (b) auf eine gewünschte Größe vergrößert wird.

4. Versiegelungsanordnung nach Anspruch 3, **dadurch gekennzeichnet, dass** diese die Funktion einer Kupplung für eine Drehbewegung bzw. einer Bremse für eine hingehende Bewegung bzw. eine hin- und hergehende Bewegung erfüllen kann.

## Revendications

1. Dispositif de joint d'étanchéité pour des surfaces cylindriques internes, contenant une vis (3) et un joint élastique (2) en forme de disque avec une lèvre profilée (a) d'étanchéité, moulée sur son rebord externe sous forme de bague profilée (b) dont la forme rappelle la lettre « L », **caractérisé en ce que** sur la bague d'étanchéité profilée, élastique (2) est exercée une pression du côté de la bague profilée (b) par l'intermédiaire de la vis (3) de réglage de grandeur de la fente entre le joint d'étanchéité et la surface étanchéifiée, le joint d'étanchéité élastique (2) étant plié par la vis (3) de réglage, suite à quoi le diamètre externe de la bague profilée (b) est réduit à une dimension souhaitable.

2. Dispositif de joint d'étanchéité selon la revendication 1, **caractérisé en ce qu'**il peut exercer la fonction d'embrayage pour le mouvement de rotation ou de frein pour le mouvement plan ou plan alternatif.

3. Dispositif de joint d'étanchéité pour des surfaces cylindriques externes, contenant une vis (3) et un joint élastique (2) en forme de disque avec une lèvre profilée (a) d'étanchéité, moulée sur son rebord interne sous forme de bague profilée (b) dont la forme rappelle la lettre « L », sur laquelle est exercée une pression du côté opposé par rapport à la bague profilée (b) par l'intermédiaire de la vis de réglage de grandeur de la fente entre le joint d'étanchéité et la surface étanchéifiée, **caractérisé en ce que** le joint d'étanchéité élastique (2) est plié par la vis (3) de réglage, suite à quoi le diamètre interne de la bague profilée (b) est agrandi à une dimension souhaitable.

4. Dispositif de joint d'étanchéité selon la revendication 3, **caractérisé en ce qu'**il peut exercer la fonction d'embrayage pour le mouvement de rotation ou de frein pour le mouvement plan ou plan alternatif.
